# EUROPEAN PATENT APPLICATION

(11) **EP 3 703 305 A1**
(43) Date of publication of application: **02.09.2020**
(21) Application number: 19305233.9
(22) Date of filing: 27.02.2019
(51) Int. Cl.: H04L 9/00

(54) **METHOD SECURED AGAINST SIDE-CHANNEL ATTACKS WITH A NEW MASKING SCHEME PROTECTING LINEAR OPERATIONS OF A CRYPTOGRAPHIC ALGORITHM**

(71) Applicant: Thales Dis France SA, 92190 Meudon (FR)
(72) Inventor: JELJELI, Hamza, 92190 Meudon (FR)
(74) Representative: Bricks, Amélie

(57) **Abstract**

The present invention relates to a method secured against side channel attacks performing an operation (f) of a cryptographic algorithm on an input message in a whitebox implementation using a cryptographic key,
said operation being linear with a Boolean exclusive OR (XOR) operation or an arithmetic operation (+), wherein :
said method is performed by a client device comprising at least one hardware processor and a random generator and comprises :
- generating (S1) a first mask and a second mask (mₖ, mₓ) by said random generator,
- obtaining (S2) an encoded chunk of the cryptographic key (E'ₖ(k)) and an encoded chunk of the input message (E'ₓ(x)),
- determining (S31) an encoded value (Eₖ(k⊕*mₖ*)) of the chunk of the cryptographic key masked with the first mask (mₖ), by using at least one look up table mapping the obtained encoded chunk of the cryptographic key (E'ₖ(k)) and the first mask (mₖ) to said encoded value of the masked chunk of the cryptographic key (Ek(k⊕m*ₖ*)),
- determining (S32) an encoded value (Eₓ(x⊕ *mₓ*)) of the chunk of the input message (x) masked with the second mask (*m*ₓ), by using at least one look up table mapping the obtained encoded chunk of the input message (E'ₓ(x)) and the second mask (*m*ₓ) to said encoded value of the masked chunk of the input message (Eₓ(x⊕ *m*ₓ)),
- determining (S4) an encoded value (E_{y}(y⊕ *mₓ*⊕*mₖ*)) of the result (y) of performing said operation (f) on the chunk of the cryptographic key (k) and on the chunk of the input message (x), masked with the first and second masks, by using at least one look up table mapping the determined encoded value of the chunk of the cryptographic key masked with the first mask (Eₖ(k⊕*mₖ*)) and the determined encoded value of the chunk of the input message masked with the second mask (Eₓ(x⊕ *mₓ*)) to said encoded value of the masked result of said operation (E_{y}(y⊕ *mₓ*⊕*mₖ*)).

## Description

### FIELD OF THE INVENTION

The present invention relates to the field of cryptographic methods and devices protected against side channel analysis, and more particularly to a new masking scheme protecting linear operations of a cryptographic algorithm against side-channel attacks.

### BACKGROUND OF THE INVENTION

Cryptographic algorithms are commonly used for ensuring the privacy of communications by encryption, for authentication or for generating a verifiable signature. However, cryptographic processes are more and more deployed in applications executed on open devices. For example many user devices now have access to the Internet, such as PCs, tablets, smartphones, and can be used for playing copyrighted digital content such as audio or video files. Such files may be cryptographically protected, for example using digital rights management (DRM) files, in order to make it available to a user only as long as the user as subscribed to an online multimedia streaming service.

Cryptographic processes are then executed in an environment where not all users or devices can be trusted. Such a context is usually called a white-box attack context. In such a context, cryptosystems sensitive data such as private keys are vulnerable to attacks since the attacker has full access to the software implementation of the cryptographic processes. Binary code of such processes is completely accessible and editable by the attacker that can analyze the binary code of the cryptography application and, for example, memory pages or registers used for temporary storage during the execution. Such manipulations may, for example, be performed using debuggers and hardware emulation tools.

Software implementations of cryptosystems able to resist white-box attacks have been sought. In such implementations the private key may be provided on the subscriber's device, e.g., a mobile device such as a mobile telephone, in a manner that it can be used by the device to decrypt or generate a signature without revealing the private key. The key might be hidden in some way inside the code implementing the decryption/signature algorithm and the algorithm may be obfuscated so that it is very difficult to determine where the key is hidden. The key's value might be also protected so that it is very difficult to determine it. This is referred to as white-box cryptography.

Software implementations of cryptosystems able to resist white-box attacks may nevertheless be sensitive to side-channel attacks, performed by capturing reads and writes to memory or registers of the device performing the cryptographic operations.

A commonly used countermeasure against side-channel attacks is the masking of the intermediate values of the cryptographic operations with a random mask. In that case, an attacker performing a first-order side-channel attack at a given point of the encryption process would only get random values and would not obtain any information on the secret key used for the cryptographic process. Such a countermeasure may have an important impact on performances by causing memory and/or time overhead.

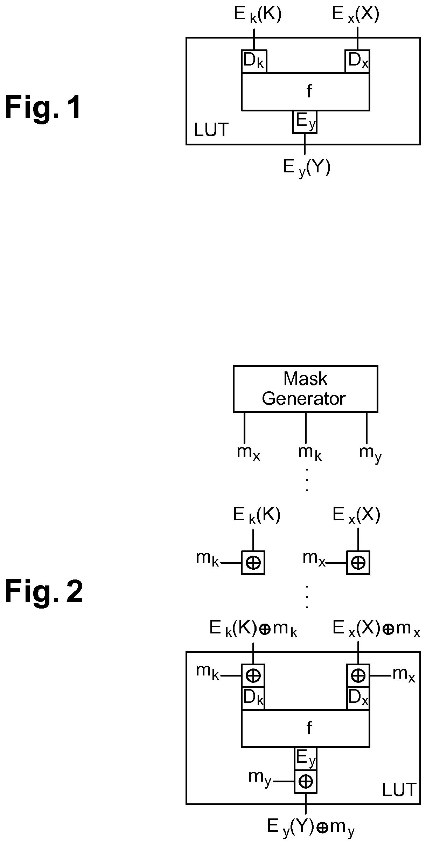

An example of such a masking scheme is given in the case of an operation f depicted on **Figure 1** having as inputs a chunk of a message x and a chunk of a cryptographic key k, and as output y such that y = f(x,k). As shown on **Figure 2****,** all values are encoded by encodings Eₓ, Eₖ and E_{y} and masked by masks mₓ, m_{y} and mₖ. Before applying the function f, the masked inputs must be unmasked.

Look-Up Tables (LUT) are often used for implementing such calculations. When a LUT inputs and outputs are masked by random masks, the LUT must be adapted in order to include the unmasking of its inputs and the masking of its outputs, which is called randomizing the LUT. Unfortunately, such a randomizing operation is specific to the masks used for the LUT inputs and outputs, and must be performed again each time a different mask is used.

As a result, there is a need for a masking scheme having a lower performance impact on cryptographic operations than usual random masking schemes, while still being resistant at least to first-order side channel attacks.

### SUMMARY OF THE INVENTION

For this purpose and according to a first aspect, this invention therefore relates to a method secured against side channel attacks performing an operation of a cryptographic algorithm on an input message in a whitebox implementation using a cryptographic key, said operation being linear with a Boolean exclusive OR (XOR) operation or an arithmetic operation (+),
wherein :
said method is performed by a client device comprising at least one hardware
   processor and a random generator and comprises :
   - generating a first mask and a second mask by said random generator,
   - obtaining an encoded chunk of the cryptographic key and an encoded chunk of the input message,
   - determining an encoded value of the chunk of the cryptographic key masked with the first mask, by using at least one look up table mapping the obtained encoded chunk of the cryptographic key and the first mask to said encoded value of the masked chunk of the cryptographic key,
   - determining an encoded value of the chunk of the input message masked with the second mask, by using at least one look up table mapping the obtained encoded chunk of the input message and the second mask to said encoded value of the masked chunk of the input message,
   - determining an encoded value of the result of performing said operation on the chunk of the cryptographic key and on the chunk of the input message, masked with the first and second masks, by using at least one look up table mapping the determined encoded value of the chunk of the cryptographic key masked with the first mask and the determined encoded value of the chunk of the input message masked with the second mask to said encoded value of the masked result of said operation,
said masks being boolean masks if said operation is linear with a Boolean exclusive OR (XOR) operation and arithmetic masks if said operation is linear with an arithmetic operation (+).

Such a method enables to perform the operation f using masked inputs and outputs without requiring any randomization of a LUT corresponding to the operation f and without requiring the generation of a dedicated output mask for masking the output of the calculation.

In an embodiment, said step of masks generation may be correlated with the step of determining an encoded value of the result of performing said operation on the chunk of the cryptographic key and on the chunk of the input message, masked with the first and second masks.

This enables the method to prevent an attacker from setting the masks to constant values.

Said random generator may be configured to generate first mask and second mask under an encoded state, and said encoded first and second masks may be used instead of the unencoded first and second masks in the steps of said method.

It enables to hide the value of the masks during the whole computation and therefore enables the method to resist second order side channel analysis attacks.

The cryptographic algorithm may perform an operation among a linear part of a hash function, of a block cipher and of a stream cipher.

The hash function may be among MD5, SHA1, SHA2, SHA256, SHA512, Skein functions, the block cipher may be among AES, XTEA, FEAL, SPECK, Threefish functions and/or the stream cipher may be among Salsa20, ChaCha functions.

According to a second aspect, this invention therefore relates also to a computer program product directly loadable into the memory of at least one computer, comprising software code instructions for performing the steps of the methods according to the first aspect when said product is run on the computer.

According to a third aspect, this invention therefore relates also to a non-transitory computer readable medium storing executable computer code that when executed by a client device comprising at least one hardware processor performs the method according to the first aspect.

According to a fourth aspect, this invention therefore relates also to a client device comprising :
- at least one hardware processor and a random generator configured to perform the method according to the first aspect,
- at least one memory for storing the encoded values and the results of the calculations performed during the different computing steps.

Said random generator may be configured to generate the first mask and second mask under an encoded state.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 illustrates schematically performing an operation f of a cryptographic algorithm;
- Figure 2 illustrates schematically a method performing an operation f of a cryptographic algorithm with a usual masking scheme;
- Figure 3 is a schematic illustration of a system according to an embodiment of the present invention;
- Figure 4 is a schematic illustration of a client device according to an embodiment of the present invention;
- Figure 5 illustrates schematically a method according the present invention;
- Figure 6 illustrates schematically a method according to an embodiment of the present invention.

### DETAILED DESCRIPTION OF EMBODIMENTS OF THE INVENTION

In the description detailed below, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The description detailed below is, therefore, not to be taken in a limiting sense, and the scope of the present invention is defined only by the appended claims, appropriately interpreted, along with the full range of equivalents to which the claims are entitled.

The invention provides a method performing an operation f of a cryptographic algorithm which, as described on **Figure 1****,** applies to a chunk of an input message x and uses a chunk of a cryptographic key k. The operation f is implemented using a lookup-table (LUT) compatible with encoded inputs and generating an encoded output. The LUT performs the decoding of the encoded inputs *Eₖ(k)* and *Eₓ(x),* computes *y* the result of the function *f* and gives an encoded output *E_{y}(y);* Eₖ, Ex and E_{y} being random bijective mappings. This LUT-based implementation of the operation f is not resistant to side-channel attacks of any-order.

The aim of the invention is to make this method secured against side channel attacks while consuming less resources than a usual masking scheme such as the one described on **Figure 2****.**

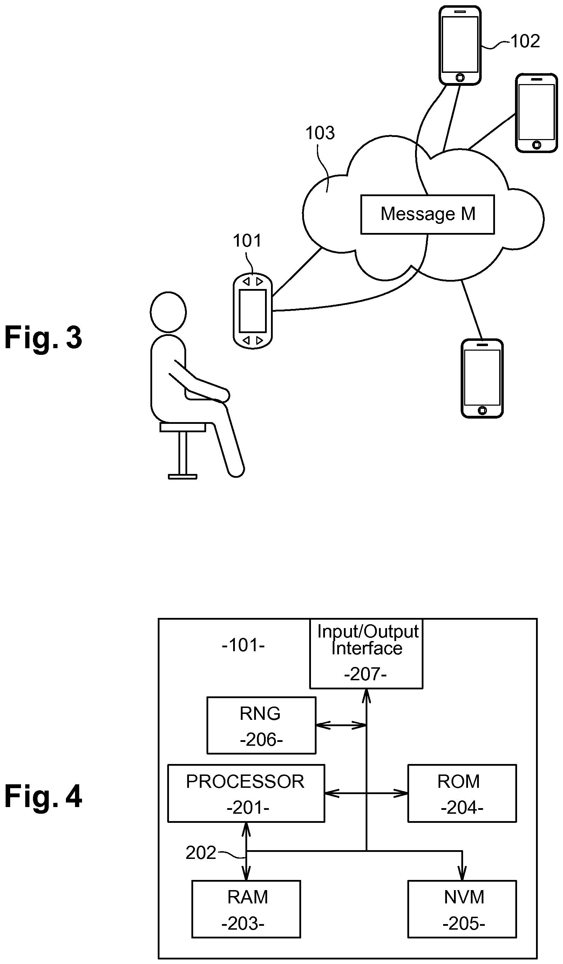

As depicted on **Figure 3****,** this method, and possibly the other steps of the cryptographic algorithm, is performed by a client device 101. Such a client device 101 may for example be a personal computer, or a smartphone. The client device 101 may be connected to at least one distant server 102 through a network 103.

As depicted on **Figure 4****,** the client device 101 may include at least one hardware processor 201, connected via a bus 202 to a computer readable memory circuit including a random access memory (RAM) 203, a read-only memory (ROM) 204, and/or a non-volatile memory (NVM) 205. The client device 101 may also include a random number generator (RNG) 206 (called also "mask generator"), which is implemented as a software RNG run by the hardware processor. The client device 101 may further include an interface 207. Such an interface may be either a wired interface such as a USB, Ethernet or Thunderbolt interface, or a wireless interface, such as a Wifi or Bluetooth interface. The interface 207 may be used to connect the client device 101 to the network 103 which may be a wired network such as an Ethernet network or to a wireless network, e.g., wide-area networks, WiFi networks, or mobile telephony networks, through which communication may be performed with the server 102.

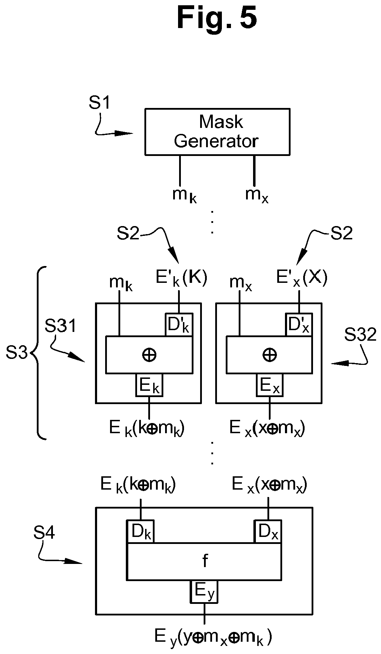

The following paragraphs describe, as depicted on **Figure 5****,** the steps of a **method** secured against side channel attacks and performing an operation f of the cryptographic algorithm, performed by the client device 101 according to a first aspect of the invention.

The method according to the invention is designed to be used when the operation to be performed is linear with a Boolean exclusive OR (XOR) operation or an arithmetic operation, such as an addition or a subtraction modulo 2^i with i an integer. It may be used for performing an operation among a linear part of a hash function (MD5, SHA1, SHA2, SHA256, SHA512, Skein functions...) of a block cipher (XTEA, FEAL, SPECK, Threefish functions...) and of a stream cipher (Salsa20, ChaCha functions...). More precisely, this operation may for example be part of an algorithm comprising only linear operations such as the hash functions SHA1/SHA2 or SHA1/SHA2-based HMAC algorithms. It may also be included in a linear part of an algorithm also having nonlinear parts such as AES or DES cryptographic schemes.

In order to secure the operation f against side channel attacks while consuming less resources than a usual masking scheme, the main idea of the invention is to change the way the input values of the operation f are masked.

The values handheld by a cryptographic algorithm are encoded using bijective mappings in order to prevent an attacker from reading such values in the client device memory. Usually, when masking is used as a countermeasure to side channel attacks, as described on Figure 2, such values are masked by combining an already encoded value with a mask. As a result, such a masking must be removed before performing a subsequent operation, as described here above.

On the contrary, the method according to the invention combines the decoded chunk of the input message x and the chunk of the cryptographic key k with a mask before encoding the result of the combination. By doing so, the encoded inputs to the linear operation f may be decoded with prior unmasking, and then the operation f itself may be performed without unmasking such inputs either, thanks to the linearity of the operation f with the XOR or arithmetic operation used for the masking.

More precisely, during a first step S1, the random generator of the client device generates a first mask mₖ and a second mask mₓ. These masks are boolean masks if the operation f is linear with a Boolean exclusive OR (XOR) operation and are arithmetic masks if the operation f is linear with an arithmetic operation. In the following paragraphs, the symbol ⊕ represents both XOR in the case of Boolean masks and any such arithmetic operation in the case of arithmetic masks.

During a second step S2, the client device obtains an encoded chunk of the cryptographic key E'ₖ(k) and an encoded chunk of the input message E'ₓ(x). Such a chunk may be any part of the whole key or input message, including the whole key or input message itself.

The server 102 may have generated randomly the bijective mappings which are to be used for encodings, and the cryptographic key, and it may have provided it to the client device. The client device may derive the encoded chunks of the key and the message by itself from the whole key and the whole input message, or it may read such encoded chunks in one of its memories or receive it through its interface 207.

During a third step S3, the client device applies the generated mask to the obtained chunks by using lookup tables.

More precisely it determines during a first masking step S31 an encoded value Eₖ(k⊕)*mₖ*) of the chunk of the cryptographic key k masked with the first mask mₖ, by using at least one key masking look up table. The key masking look up tables map the obtained encoded chunk of the cryptographic key E'ₖ(k) and the first mask mₖ to said encoded value of the masked chunk of the cryptographic key Eₖ(k⊕)*mₖ*). In order to do so, the key masking look-up tables are equivalent to, as illustrated on figure 5, decoding the encoded key E'ₖ(k), then masking using the first mask mₖ and finally encoding Eₖ.

The second step S2 and the first masking step S31 may be merged in one step and be implemented with a single instruction reading access to the look up tables with as read indexes the generated mask and the obtained chunk to obtain the encoded value of the masked chunk of the cryptographic key.

During a second masking step S32, the client device determines an encoded value Eₓ(xE⊕ *mₓ*) of the chunk of the input message x masked with the second mask *mₓ*, by using at least one input message masking look up table. The input message masking look up tables map the obtained encoded chunk of the input message E'ₓ(x) and the second mask *mₓ* to said encoded value of the masked chunk of the input message Eₓ(xE⊕ *mₓ*)*.*

In order to do so, the input message masking look-up tables are equivalent to, as illustrated on figure 5, decoding the encoded message E'ₓ(x), then masking using the second mask mₓ and finally encoding Eₓ.

In these two masking steps two or more operations among decoding, masking and encoding may be performed altogether by a single LUT. Preferentially decoding, masking and encoding are performed altogether by a single LUT to ensure the confidentiality of the encodings.

Finally, during a fourth step S4, the client device performs securely the computation y = f(x,k), protected against the side channel attacks by masking, using a Look up table.

More precisely, it determines an encoded value E_{y}(y⊕ *mₓ*⊕*mₖ*) of the result y of performing the operation f on the chunk of the cryptographic key k and on the chunk of the input message x, masked with the first and second masks, by using at least one operation look up table. The operation look up tables map the determined encoded value of the chunk of the cryptographic key masked with the first mask Eₖ(k⊕*mₖ*) and the determined encoded value of the chunk of the input message masked with the second mask Eₓ(xE⊕ *mₓ*) to said encoded value of the masked result of the operation E_{y}(y⊕ *mₓ*⊕*mk*)*.*
In order to do so, as illustrated on figure 5, the operation look up tables are equivalent to decoding both the encoded value Eₖ(k⊕*mₖ*) of the chunk of the cryptographic key masked with the first mask mₖ and the encoded value Eₓ(xE⊕ *mₓ*) of the chunk of the input message x masked with the second mask *mₓ*, and then performing the operation f, and finally encoding the result E_{y}.

In this fourth step two or more operations among decoding, performing the operation f and encoding may be performed altogether by a single LUT. Preferentially decoding, performing the operation f and encoding are performed altogether by a single LUT to ensure the confidentiality of the encodings.

Since the operation f is linear with the XOR or arithmetic operation used for the masking, it is possible to perform the operation f on the chunk of the cryptographic key and the chunk of the input message without unmasking it first. Consequently, the LUT, or combination of LUTs, used at the fourth step for the operation f can be the standard LUT representing the operation f. There is no need to randomize it for making it compatible with a specific masking of its inputs or for outputting a masked output, which makes the implementation faster compared to the commonly used masking scheme presented in figure 2. Such a standard LUT may be provided by the server 102 to the client device 101. It also requires generating less masks as the output mask of the operation f is the XOR of the 2 inputs masks rather than a specific third mask as shown on Figure 2.

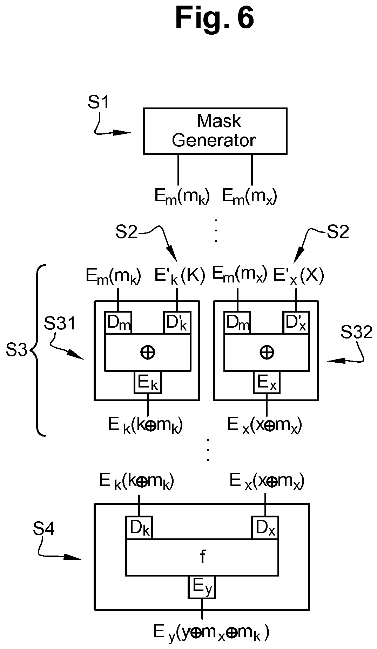

The random generator may be configured to generate the first mask and second mask under an encoded state Eₘ(*mₖ*), Eₘ(*mₓ*). In such a case, the client device may use these encoded first and second masks instead of the unencoded first and second masks in the steps of the method described here above. This embodiment is illustrated on figure 6.
In this embodiment, during the first and second masking steps S31 and S32, the masking look up tables also decode the encoded first and second mask, before masking the chunk of the cryptographic key k and the chunk of the input message x. Such an embodiment prevents, during the whole computation, the masks from being handheld as unencoded values, which masks makes the implementation resistant to second-order side channel attacks.

In another embodiment, said step of masks generation S1 is correlated with the fourth step S4 determining an encoded value E_{y}(y⊕ *mx*⊕*mₖ*) of the result y of performing the operation f on the chunk of the cryptographic key k and on the chunk of the input message x, masked with the first and second masks. Thus an attempt to modify the behavior of the random generation is not possible without compromising the cryptographic computation, which prevents any attempt by an attacker of forcing masking using a constant value. Such a correlation is for example detailed in the patent application EP17306665.5.

According to a second aspect, this invention therefore relates also to a computer program product directly loadable into the memory of at least one computer, comprising software code instructions for performing the steps of the methods according to the first aspect when said product is run on the computer.

According to a third aspect, this invention therefore relates also to a non-transitory computer readable medium storing executable computer code that when executed by a client device comprising at least one hardware processor performs the methods according to the first aspect.

According to a fourth aspect, this invention therefore relates also to a client device 101 comprising :
- at least one hardware processor 201 and a random generator 206 configured to perform the steps of the methods according to the first aspect,
- at least one memory for storing the encoded values and the results of the calculations performed during the different computing steps.

## Claims

1. A method secured against side channel attacks performing an operation (f) of a cryptographic algorithm on an input message (x) in a whitebox implementation using a cryptographic key (k),
said operation being linear with a Boolean exclusive OR (XOR) operation or an arithmetic operation (+),
wherein :
said method is performed by a client device (101) comprising at least one hardware processor (201) and a random generator (206) and comprises :
- generating (S1) a first mask and a second mask (mₖ, mₓ) by said random generator,
- obtaining (S2) an encoded chunk of the cryptographic key (E'ₖ(k)) and an encoded chunk of the input message (E'ₓ(x)),
- determining (S31) an encoded value (Eₖ(k(D*mₖ*)) of the chunk of the cryptographic key masked with the first mask (mₖ), by using at least one look up table mapping the obtained encoded chunk of the cryptographic key (E'ₖ(k)) and the first mask (mₖ) to said encoded value of the masked chunk of the cryptographic key (Ek(k⊕*mₖ*)),
- determining (S32) an encoded value (Eₓ(x⊕ *mₓ*)) of the chunk of the input message (x) masked with the second mask (*mₓ*), by using at least one look up table mapping the obtained encoded chunk of the input message (E'ₓ(x)) and the second mask (*mₓ*) to said encoded value of the masked chunk of the input message (Eₓ(x⊕ *mₓ*)),
- determining (S4) an encoded value (E_{y}(y⊕ *mₓ*⊕*mₖ*)) of the result (y) of performing said operation (f) on the chunk of the cryptographic key (k) and on the chunk of the input message (x), masked with the first and second masks, by using at least one look up table mapping the determined encoded value of the chunk of the cryptographic key masked with the first mask (Eₖ(k⊕*mₖ*)) and the determined encoded value of the chunk of the input message masked with the second mask (Eₓ(x⊕ *mₓ*)) to said encoded value of the masked result of said operation (E_{y}(y⊕ *mₓ*⊕*mₖ*))*,*
said masks being boolean masks if said operation is linear with a Boolean exclusive OR (XOR) operation and arithmetic masks if said operation is linear with an arithmetic operation (+).

2. The method of claim 1, wherein said step of masks generation (S1) is correlated with the step of determining (S4) an encoded value (E_{y}(y⊕ *mₓ*⊕*mₖ*)) of the result (y) of performing said operation (f) on the chunk of the cryptographic key (k) and on the chunk of the input message (x), masked with the first and second masks.

3. The method of claim 1 or 2 wherein said random generator (206) is configured to generate first mask and second mask under an encoded state (Eₘ(*mₖ*), Eₘ(mₓ)), and wherein said encoded first and second masks are used instead of the unencoded first and second masks in the steps of said method.

4. The method of claim 1, wherein the cryptographic algorithm performs an operation among a linear part of a hash function, of a block cipher and of a stream cipher.

5. The method of claim 4, wherein the hash function is among MD5, SHA1, SHA2, SHA256, SHA512, Skein functions, the block cipher is among AES, XTEA, FEAL, SPECK, Threefish functions and/or the stream cipher is among Salsa20, ChaCha functions.

6. A computer program product directly loadable into the memory of at least one computer, comprising software code instructions for performing the steps of any one of claims 1 to 5 when said product is run on the computer.

7. A non-transitory computer readable medium storing executable computer code that when executed by a client device (101) comprising at least one hardware processor (201) performs the steps of any one of claims 1 to 5.

8. A client device (101) comprising :
- at least one hardware processor (201) and a random generator (206) configured to perform the steps of any one of claims 1 to 5,
- at least one memory (203, 204, 205) for storing the encoded values and the results of the calculations performed during the different computing steps.

9. The client device of claim 8, wherein said random generator (206) is configured to generate the first mask and second mask under an encoded state.
